# EUROPÄISCHE PATENTSCHRIFT

(11) **EP 4 304 983 B1**
(45) Veröffentlichungstag und Bekanntmachung des Hinweises auf die Patenterteilung: **05.11.2025**
(21) Anmeldenummer: 22711927.8
(22) Anmeldetag: 03.03.2022
(51) Int. Cl.: C01B 32/21, H01M 8/0213, H01M 8/0221, H01M 8/0226, H01M 8/0228

(54) **VERFAHREN ZUM AUSBILDEN EINER HYDROPHILEN OBERFLÄCHE AUF EINEM GRAPHITHALTIGEN WERKSTOFF UND VERFAHREN ZUM FERTIGEN EINER BIPOLARPLATTE SOWIE BIPOLARPLATTE UND BRENNSTOFFZELLE BZW. FLUSSBATTERIE MIT DERSELBEN**
METHOD FOR FORMING A HYDROPHILIC SURFACE ON A GRAPHITE-CONTAINING MATERIAL AND METHOD FOR MANUFACTURING A BIPOLAR PLATE, BIPOLAR PLATE, AND FUEL CELL OR FLOW BATTERY COMPRISING SAME
PROCÉDÉ DE FORMATION D'UNE SURFACE HYDROPHILE SUR UN MATÉRIAU CONTENANT DU GRAPHITE ET PROCÉDÉ DE FABRICATION D'UNE PLAQUE BIPOLAIRE, PLAQUE BIPOLAIRE ET PILE À COMBUSTIBLE OU BATTERIE À CIRCULATION LE COMPRENANT

(30) Priorität: 11.03.2021 DE 102021105963; 26.05.2021 DE 102021113591
(43) Veröffentlichungstag der Anmeldung: 17.01.2024
(73) Patentinhaber: Schunk Kohlenstofftechnik GmbH, 35452 Heuchelheim (DE)
(72) Erfinder: RINN, Günter, 35633 Lahnau (DE); VOORMANN, Hauke, 35440 Linden (DE); BAUMANN, Sören, 35394 Gießen (DE); ALTUNTAS, Mesut, 60320 Frankfurt (DE)
(74) Vertreter: Qip Patent & Recht Dr. Kuehn & Partner mbB
(86) Internationale Anmeldenummer: PCT/EP2022/055423
(87) Internationale Veröffentlichungsnummer: WO 2022/189258

(56) Entgegenhaltungen:
- EP-A1- 2 615 675
- EP-A1- 2 960 973
- CAPPELLI E ET AL: "Laser annealing of amorphous carbon films", APPLIED SURFACE SCIENCE, ELSEVIER, AMSTERDAM, NL, vol. 255, no. 10, 1 March 2009 (2009-03-01), pages 5620 - 5625, XP026001190, ISSN: 0169-4332, [retrieved on 20081028], DOI: 10.1016/J.APSUSC.2008.10.062

## Beschreibung

### GEBIET DER ERFINDUNG

Die vorliegende Erfindung betrifft ein Verfahren zum Ausbilden einer hydrophilen Oberfläche auf einem graphithaltigen Werkstoff. Ferner betrifft die Erfindung ein Verfahren zur Fertigen einer Bipolarplatte einer Brennstoffzelle oder einer Flussbatterie.

### HINTERGRUND DER ERFINDUNG

Graphithaltige Werkstoffe können in verschiedensten Anwendungen eingesetzt werden, beispielsweise um damit unterschiedliche Bauelemente auszubilden. Dabei können physikalische Eigenschaften des darin enthaltenen Graphits wie beispielsweise dessen hohe elektrische Leitfähigkeit, mechanischen Eigenschaften, thermische Stabilität und/oder chemische Stabilität vorteilhaft genutzt werden.

Bei manchen Anwendungen kann es hierbei vorteilhaft sein, wenn eine Oberfläche eines mit einem graphithaltigen Werkstoff hergestellten Bauelements bestimmte physikalische Eigenschaften bei einem Kontakt mit anderen Materialien aufweist. Insbesondere kann es für manche Anwendungen vorteilhaft sein, wenn diese Oberfläche hydrophil ist, d.h. mit Wasser stark wechselwirkt und sich somit von Wasser gut benetzen lässt.

Nachfolgend werden Ausführungsformen eines Verfahrens zum Ausbilden einer hydrophilen Oberfläche auf einem graphithaltigen Werkstoff sowie damit erzielbare physikalische Eigenschaften und/oder Vorteile ausführlich mit Bezug auf ein Ausbilden einer hydrophilen Oberfläche an einer mit graphithaltigem Werkstoff gebildeten Bipolarplatte, wie sie in einer Brennstoffzelle oder einer Flussbatterie zum Einsatz kommen kann, beschrieben. Es wird jedoch darauf hingewiesen, dass Ausführungsformen des hierin beschriebenen Verfahrens auch bei der Fertigung anderer Bauelemente, bei denen zumindest Teiloberflächen hydrophil ausgebildet sein sollen, zum Einsatz kommen können.

Bipolarplatten sollen für Brennstoffzellen, die zu Stapeln geschichtet einen Kern eines Brennstoffzellensystems bilden, mehrere verschiedene Aufgaben erfüllen. Einerseits sollen sie benachbarte Brennstoffzellen miteinander verbinden, d.h. eine Anode einer Zelle mit einer Kathode einer benachbarten Zelle physikalisch und elektrisch leitend verbinden. Andererseits soll über eine Fläche der Bipolarplatte eine Gasverteilung hin zu Reaktionsräumen innerhalb der Brennstoffzellen erfolgen können, das heißt die Bipolarplatte soll Reaktionsgase in Reaktionszonen leiten. Die Bipolarplatte weist hierzu typischerweise auf beiden Seiten Strömungsprofile (sogenannte Flowfields) auf, die urgeformt und/oder umgeformt, d.h. zum Beispiel gefräst oder eingepresst, sein können und durch die auf der einen Seite Wasserstoff strömt und auf der anderen Seite Luft zugeführt wird. Die Bipolarplatte regelt hierbei im Allgemeinen auch eine Abfuhr von Wasserdampf beziehungsweise Abgabe von thermischer und elektrischer Energie. Außerdem soll die Bipolarplatte ferner für eine Gastrennung zwischen angrenzenden Zellen, für eine Dichtung nach außen und gegebenenfalls für eine Kühlung sorgen.

Um den an sie gestellten Anforderungen gerecht werden zu können, sollten zumindest Teile der Oberfläche der Bipolarplatte möglichst gut von Wasser benetzt werden können, d.h. stark hydrophil sein. Beispielsweise sollte die Bipolarplatte anodenseitig, d.h. brenngasseitig, eine gleichmäßige Befeuchtung einer Elektrode und einer Membran in der Brennstoffzelle ermöglichen. Kathodenseitig, d.h. sauerstoffseitig, sollte Wasser, welches bei einer Reaktion innerhalb der Brennstoffzelle entsteht, effektiv abgeführt werden können, da dieses ansonsten ein Porensystem in der Elektrode und/oder Luftkanäle in der Bipolarplatte blockieren kann. Indem zugehörige Bereiche der Oberfläche der Bipolarplatte hydrophil ausgebildet werden und somit sehr gute Benetzungseigenschaften aufweisen, kann erreicht werden, dass Wasser nicht mehr tropfenförmig vorliegt, sondern einen Oberflächenfilm ausbildet und dann beispielsweise mit einem Gasstrom leicht ausgetragen werden kann.

Es sind verschiedene Ansätze bekannt, um Oberflächen von Werkstoffen hydrophil auszubilden.

Beispielsweise kann eine Oberfläche mit einem hydrophil wirkenden Material beschichtet werden. Als Beschichtungsmaterialien eignen sich beispielsweise polare Polymere.

Eine weitere Möglichkeit zur Ausbildung einer hydrophilen Oberfläche besteht in einer Behandlung mit einem Siloxan-haltigen Plasma, wodurch ähnlich wie bei einer Beschichtung oder einer Oberflächenmodifikation eine sehr dünne Schicht aus pyrogener Kieselsäure erzeugt wird.

Eine häufig eingesetzte weitere Möglichkeit besteht in der direkten Oxidation der hydrophil auszubildende Oberfläche. Hierzu können verschiedene Verfahren zum Einsatz kommen wie beispielsweise eine nasschemische Oxidation mit stark oxidierenden Säuren oder Wasserstoffperoxid, eine trockene Oxidation in der Gasphase beispielsweise mit Fluor oder Schwefeltrioxid, eine atmosphärische Plasmabehandlung, eine Niederdruck-Plasmabehandlung oder eine Corona-Behandlung.

Die bekannten Ansätze gehen jedoch meist mit Nachteilen oder allenfalls aufwendig zu überwindenden Problemstellungen einher. Beispielsweise kann eine auf die Oberfläche einer Bipolarplatte aufgebrachte Schicht einen elektrischen Kontaktwiderstand an der Oberfläche der Bipolarplatte erhöhen. Außerdem kann sich eine gleichmäßige Beschichtung von zum Teil sehr filigranen Strukturen an der Oberfläche der Bipolarplatte schwierig gestalten. Auch eine dauerhafte und zuverlässige Haftung der Beschichtung an der Oberfläche der Bipolarplatte kann schwierig zu erreichen sein.

Eine Oxidation mit stark toxischen Gasen wie Fluor oder Schwefeltrioxid kann hohe Anforderungen an hierbei einzusetzende Gerätschaften mit sich bringen, da eine solche Behandlung im Allgemeinen ausschließlich in hermetisch abgeschlossenen Systemen durchgeführt werden sollte. Bei manchen der oben genannten Verfahren wie beispielsweise der Plasma-Behandlung oder der Corona-Behandlung wird zwar direkt nach der Behandlung eine oft zufriedenstellende Hydrophilie erkannt, allerdings wurde häufig beobachtet, dass diese Hydrophilie nicht zeitlich stabil ist und beispielsweise nur über wenige Stunden oder Tage anhält. Außerdem ist es mit vielen der bekannten Verfahren schwierig, kleinflächige Teilbereiche einer Oberfläche gezielt lokal hydrophil auszubilden, beispielsweise indem hierbei andere Teilbereiche aufwendig maskiert werden.

In der EP 2 615 675 A1 und der EP 2 960 973 A1 sind Verfahren zum Herstellen von Brennstoffzellenseparatoren beschrieben, bei denen eine Oberfläche zunächst gezielt aufgeraut und anschließend mit einem Laser bestrahlt wird. Die beschriebenen Verfahren benötigen im Allgemeinen mehrere Verfahrensschritte. Somit sind die Verfahren aufwendig durchzuführen bzw. erfordern signifikanten apparativen Aufwand.

CAPPELLI E ET AL: "Laser annealing of amorphous carbon films", APPLIED SURFACE SCIENCE, ELSEVIER, AMSTERDAM, NL, Bd. 255, Nr. 10, 1. März 2009 (2009-03-01), Seiten 5620-5625, XP026001190, ISSN: 0169-4332, DOI: 10.1016/J.APSUSC.2008.10.062 offenbart ein weiteres Verfahren zum Ausbilden einer hydrophilen Oberfläche auf einem graphithaltigen Werkstoff.

### ZUSAMMENFASSUNG DER ERFINDUNG UND VORTEILHAFTER AUSFÜHRUNGSFORMEN

Es kann ein Bedarf an einem Verfahren zum Ausbilden einer hydrophilen Oberfläche auf einem graphithaltigen Werkstoff bestehen, mithilfe dessen zumindest einige der eingangs genannten Nachteile bzw. Problemstellungen herkömmlich bekannter Ansätze vermieden bzw. verringert werden können. Insbesondere kann ein Bedarf an einem solchen Verfahren bestehen, bei dem ein aus dem graphithaltigen Werkstoff hergestelltes Bauelement an seiner Oberfläche einen geringen elektrischen Kontaktwiderstand aufweist, bei dem auch filigrane Oberflächenstrukturen hydrophil ausgebildet werden können, bei dem keine stark toxischen Stoffe oder Katalysatorgifte eingesetzt werden brauchen, bei dem eine Hydrophilie langzeitstabil erzeugt werden kann und/oder welches einfach, mit geringem apparativem Aufwand und/oder kostengünstig durchzuführen ist. Ferner kann ein Bedarf an einem Verfahren zum Fertigen einer Bipolarplatte einer Brennstoffzelle oder einer Flussbatterie bestehen, bei dem durch Einsatz des hierin beschriebenen Verfahrens Teilbereiche der Bipolarplatte hydrophil ausgestattet werden.

Einem solchen Bedarf kann mit dem Gegenstand der unabhängigen Ansprüche entsprochen werden. Vorteilhafte Ausführungsformen sind in den abhängigen Ansprüchen definiert sowie in der nachfolgenden Beschreibung beschrieben und in den Figuren dargestellt.

Ein erster Aspekt der Erfindung betrifft ein Verfahren zum Ausbilden einer hydrophilen Oberfläche auf einem graphithaltigen Werkstoff, wobei die hydrophil auszubildende Oberfläche mit einem gepulsten Laser mit einer Leistungsdichte vom mindestens 0,5 MW/mm², vorzugsweise mindestens 1 MW/mm² oder mindestens 2 MW/mm², bestrahlt wird.

Ein zweiter Aspekt der Erfindung betrifft ein Verfahren zur Fertigen einer Bipolarplatte einer Brennstoffzelle oder einer Flussbatterie, wobei das Verfahren aufweist: Bereitstellen eines plattenartigen Substrats, welches zumindest angrenzend an eine freiliegende Oberfläche des Substrates aus einem graphithaltigen Werkstoff besteht, und Ausbilden zumindest von Teilbereichen der freiliegenden Oberfläche als hydrophile Oberfläche mittels des Verfahrens gemäß einer Ausführungsform des ersten Aspekts der Erfindung.

Ferner beschrieben wird eine Bipolarplatte einer Brennstoffzelle oder einer Flussbatterie, welche mithilfe eines Verfahrens gemäß einer Ausführungsform des zweiten Aspekts der Erfindung gefertigt ist.

Ferner beschrieben wird eine Energiespeicheranordnung, insbesondere in Form einer Brennstoffzelle oder einer Flussbatterie, mit einer Bipolarplatte.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Kurz und grob zusammengefasst kann ein Grundgedanke zu der hierin beschriebenen Idee darin gesehen werden, dass überraschenderweise beobachtet wurde, dass die Oberfläche eines graphithaltigen Werkstoffs hydrophile Eigenschaften ausbildet, wenn sie mit einem gepulsten Laser mit einer verhältnismäßig hohen Leistungsdichte bestrahlt wird. Zwar wurden graphithaltige Werkstoffe auch bisher bereits unter Zuhilfenahme von Lasern bearbeitet, allerdings wurden hierbei Laser eingesetzt, deren Leistungsdichte deutlich geringer war als diejenige der Laser, die für die hierin beschriebene Erfindung eingesetzt werden sollen. Bei der Behandlung mit solchen leistungsärmeren Lasern bildeten die im Allgemeinen ohnehin eher hydrophoben Oberflächen des graphithaltigen Werkstoffs im Regelfall noch eine verstärkte Hydrophobie aus. Es war daher nicht zu erwarten, dass die mit einem Laser bestrahlte Oberfläche eines graphithaltigen Werkstoffs durch eine geeignete Wahl von Eigenschaften des hierzu eingesetzten Lasers nicht verstärkt hydrophob sondern sogar hydrophil ausbilden würde.

Nachfolgend werden mögliche Details zu Ausgestaltungen der hierin vorgeschlagenen Verfahren und Produkte erläutert.

Graphit bietet als kohlenstoffhaltiges Material für viele Anwendungszwecke vorteilhafte Eigenschaften. Für die Verwendung beispielsweise in Bipolarplatten bietet Graphit eine sehr hohe elektrische Leitfähigkeit zusammen mit einer hohen thermischen Belastbarkeit und einer ausreichend hohen mechanischen Festigkeit.

Zur Bildung von Bauelementen wie zum Beispiel Bipolarplatten werden unter anderem graphithaltige Werkstoffe eingesetzt, bei denen Graphitpartikel in einer Polymermatrix eingebettet sind. Die Graphitpartikel geben dem Werkstoff gewünschte elektrische und/oder thermische Eigenschaften. Die Polymermatrix dient unter anderem dazu, die Graphitpartikel mechanisch zusammen zu halten und die Last im Bauteil zu übertragen. Die Polymermatrix kann beispielsweise ein Epoxidharz enthalten. Die Graphitpartikel wirken somit als Füllstoff und die Polymermatrix als eine Art Bindemittel. In dem Werkstoffgemisch können neben Graphitpartikeln und Polymeren noch weitere Bestandteile enthalten sein, beispielsweise in Form von Ruß, weiteren Bindemitteln oder ähnlichem.

Vorteilhafterweise kann der graphithaltige Werkstoff einen Graphitanteil von mindestens 60 %, vorzugsweise mindestens 70 % oder sogar mindestens 80 %, aufweisen. Die Prozentangaben können sich hierbei auf das Volumen beziehen. Aufgrund des hohen Graphitanteils kann der Werkstoff unter anderem eine sehr gute elektrische Leitfähigkeit bieten, wie sie insbesondere bei einer Verwendung zur Ausbildung von Bipolarplatten vorteilhaft ist.

Ein Polymeranteil, d.h. ein Anteil der Polymermatrix, in dem graphithaltigen Werkstoff liegt vorzugsweise bei mindestens 20 Vol-%, vorzugsweise im Bereich von 20 - 40 Vol-%, stärker bevorzugt im Bereich von 25 - 35 Vol-%. Mit anderen Worten beinhaltet der graphithaltige Werkstoff während seiner Behandlung mit dem Laser einen erheblichen Anteil an Polymeren, welche als Bindemittel für Graphitpartikel dienen können und/oder für eine mechanische Stabilität und/oder eine Gasdichtheit der Bipolarplatte erforderlich sein können. Anders ausgedrückt wird der graphithaltige Werkstoff vor seiner Behandlung mit dem Laser vorzugsweise weder carbonisiert noch calciniert. Eine Carbonisierung bzw. Calcinierung eines Bauteils aus graphithaltigem Werkstoff führt meist zu einem erheblichen Schwund und/oder mechanischen Spannungen in dem betreffenden Bauteil, sodass Verzug, erhöhte Maßtoleranzen und/oder Bruch resultieren können. Mit carbonisiertem bzw. calciniertem graphithaltigem Werkstoff sind daher oft keine großen Bauteile, insbesondere keine großflächigen Bipolarplatten, fertigbar. Bei dem hierin beschriebenen Verfahren wird jedoch vorzugsweise auf eine Carbonisierung bzw. Calcinierung verzichtet, wodurch eine Fertigung großformatiger und/oder sehr dünner Bipolarplatten (z.B. mit einer Länge von mehr als 300 mm oder mehr als 400 mm, einer Breite von mehr als 100 mm oder mehr als 130 mm und/oder einer Dicke von zwischen 0,3 mm und 2 mm, beispielsweise 0,6 mm ± 0,2 mm) ermöglicht wird. Die Behandlung mit dem Laser wird hierbei vorzugsweise derart vorgenommen, dass das in dem graphithaltigen Werkstoff enthaltene polymere Bindemittel durch einen dabei eingebrachten hohen Energieeintrag nicht bzw. nicht übermäßig geschädigt wird, sondern nur von der Oberfläche der Bipolarplatte abgetragen wird.

Beispiele und mögliche Eigenschaften von graphithaltigen Werkstoffen sind unter anderem in der früheren Patentanmeldung PCT/EP2020/078489 der Anmelderin beschrieben. Die dort beschriebenen graphithaltigen Werkstoffe können in Ausführungsformen der hierin beschriebenen Verfahren bearbeitet und an ihrer Oberfläche hydrophil ausgebildet werden. Der Inhalt der früheren Patentanmeldung wird hierin durch Inbezugnahme vollumfänglich aufgenommen.

Es ist bekannt, dass reines Graphit im Allgemeinen keine polaren Gruppen aufweist, sodass Oberflächen des Graphits in der Regel hydrophobe Eigenschaften besitzen.

Bisher wurde davon ausgegangen, dass Oberflächen eines graphithaltigen Werkstoffs zwar mithilfe eines Lasers bearbeitet werden können, dass dabei aber ihre hydrophoben Eigenschaften in vielen Fällen zumindest nicht verringert sondern eher verstärkt werden. Insbesondere wurde angenommen oder beobachtet, dass mikroskopische Oberflächentexturen, wie sie typischerweise beim Behandeln einer Oberfläche mit einem Laser gebildet werden, dazu führen, dass die behandelte Oberfläche noch stärker hydrophobe Eigenschaften ausbildet, da solche mikroskopische Oberflächenstrukturen aufgrund des Lotuseffekts typischerweise eine Benetzung mit Wasser hemmen.

In der EP 2 615 675 A1 wird beschrieben, dass ein Brennstoffzellenseparator aus einer Zusammensetzung aus Graphitpulver, Epoxidharz, Phenolharz und anderen Bestandteilen mit einem leistungsstarken Laser behandelt werden soll, um unter anderem hydrophile Eigenschaften von dessen Oberfläche zu beeinflussen. Allerdings werden in der EP 2 615 675 A1 lediglich Angaben betreffend die Leistung und die Pulsdauer des einzusetzenden Lasers beschrieben. Dabei wird unter anderem angegeben, dass zu kurze Pulsdauern von beispielsweise weniger als 30 ns vermieden werden sollten, da ansonsten befürchtet wird, dass es zu einem Verziehen (englisch: warping) des Substrats kommen kann. Angaben über eine Pulswiederholungsfrequenz und/oder eine Querschnittsfläche eines Laserpulsstrahls werden in der EP 2 615 675 A1 nicht gemacht, sodass eine Aussage über durch den Pulslaser bewirkte Leistungsdichten aus dieser Druckschrift nicht ableitbar ist.

Entgegen solcher Erwartungen bzw. bisherigen Beobachtungen wurde durch die Erfinder der vorliegend beschriebenen Erfindung überraschenderweise beobachtet, dass eine Oberfläche eines graphithaltigen Werkstoffs tatsächlich nach der Bestrahlung mit einem gepulsten Laser, der gewisse Voraussetzungen erfüllt, hydrophiler ist als vor dieser Bestrahlung. Mit anderen Worten ist ein Kontaktwinkel, den Wasser mit einer derart behandelten Oberfläche bildet, kleiner als vor der Bestrahlung. Dabei wurde erkannt, dass es für die Verbesserung der Hydrophilie maßgeblich zu sein scheint, dass der gepulste Laser die Oberfläche mit einer Leistungsdichte bestrahlt, die über einem Grenzwert liegt. Als ein solcher Grenzwert wird 0,5 MW/mm² angenommen. Eine sehr gute Hydrophilie der behandelten Oberfläche wurde beispielsweise bei Bestrahlung mit gepulstem Laserlicht einer Leistungsdichte von mindestens 1 MW/mm² oder insbesondere mindestens 1,5 MW/mm² beobachtet. Einen Kurzpulslaser beleuchtet hierbei während einer sehr kurzen Pulsdauer eine im Allgemeinen sehr kleine Fläche von deutlich weniger als 1 mm² kurzzeitig mit einer sehr hohen Lichtleistung.

Es wurde versucht, die überraschende Beobachtung der verbesserten Hydrophilie aufgrund der Bestrahlung mit hoher Leistungsdichte, zu verstehen. Dabei wurde das nachfolgend dargelegte Modell entwickelt und Vermutungen hinsichtlich der durch die Laserbestrahlung bewirkten Effekte angestellt. Allerdings wird ausdrücklich darauf hingewiesen, dass die der Beobachtung zugrunde liegenden mikroskopischen, d.h. insbesondere atomaren oder molekularen Wechselwirkungen, bisher nicht vollständig verstanden sind. Daher soll die folgende Beschreibung des Modells und der Vermutungen in keiner Weise den Umfang der Erfindung einschränken:
Es wird angenommen, dass die Bestrahlung des graphithaltigen Werkstoffs mit einer sehr hohen Leistungsdichte dazu führt, dass in dem Graphit Störstellen, insbesondere Fehlstellen, generiert werden. Solche Störstellen in einem Kristallgitter könnten an sich bereits die hydrophilen Eigenschaften an der Oberfläche des Werkstoffs beeinflussen. Ergänzend wird angenommen, dass an solchen Störstellen nachfolgend Hydroxylgruppen ankoppeln können. Diese Hydroxylgruppen können aufgrund ihrer Polarität die hydrophilen Eigenschaften der Werkstoffoberfläche vermutlich signifikant verstärken. Auch ein Ankoppeln von Sauerstoff kann ähnliche Effekte bewirken.

Insbesondere wird davon ausgegangen, dass die hydrophilen Eigenschaften der behandelten Oberfläche verstärkt werden können, wenn der gepulste Laser diese Oberflächen mit Pulsen mit einer flächenbezogenen Pulsenergie von mindestens 0,1 J/mm², vorzugsweise mindestens 0,2 J/mm² oder sogar mindestens 0,3 J/mm², bestrahlt.

Anders ausgedrückt sollte der zur Behandlung der Oberfläche des graphithaltigen Werkstoffs eingesetzte gepulste Laser Lichtpulse emittieren, bei denen jeder einzelne Lichtpuls eine verhältnismäßig große Energiemenge auf eine kleine Fläche einstrahlt, sodass sich eine Pulsenergie einstellt, die einen unteren Grenzwert von mindestens 0,1 J/mm² übersteigt. Die eingestrahlte Pulsenergie kann dabei innerhalb der bestrahlten Fläche lokal variieren und bei dem genannten Grenzwert kann es sich um einen gemittelten Wert handeln. Ein einzelner Lichtpuls kann hierbei beispielsweise eine Energie von mehr als 1 mJ aufweisen. Eine von dem Lichtpuls bestrahlte Fläche kann näherungsweise rund oder rechteckig oder anders geformt sein und beispielsweise einen Durchmesser bzw. laterale Dimensionen von 0,1 mm oder weniger aufweisen.

Es wird vermutet, dass neben der Leistungsdichte auch die flächenbezogene Pulsenergie des von dem Laser emittierten Lichtpulses einen erheblichen Einfluss auf die Ausbildung hydrophiler Eigenschaften hat und vorzugsweise beide Parameter gewisse Grenzwerte überschreiten sollten.

Dabei kann im Rahmen des oben vorgestellten Modells angenommen werden, dass mit zunehmender flächenbezogener Pulsenergie eine Dichte von Störstellen, wie sie durch die Bestrahlung mit dem Laserlicht generiert werden können, gesteigert werden kann.

Allerdings wird ergänzend davon ausgegangen, dass beim Ausbilden der hydrophilen Eigenschaften die mit dem gepulsten Laser bestrahlte Oberfläche mit Pulsen mit einer flächenbezogenen Pulsenergie von weniger als 1 J/mm², vorzugsweise weniger als 0,8 J/mm² oder sogar weniger als 0,7 J/mm², bestrahlt werden sollte.

Anders ausgedrückt sollte der zur Behandlung der Oberfläche des graphithaltigen Werkstoffs eingesetzte gepulste Laser Lichtpulse emittieren, deren Energiemenge auf die bestrahlte Fläche bezogen einen oberen Grenzwert von 1 J/mm² nicht übersteigen sollte.

Es wird vermutet, dass es bei flächenbezogenen Pulsenergien oberhalb eines solchen Grenzwerts zu negativ wirkenden thermischen Effekten kommen kann. Mit anderen Worten wird vermutet, dass für den Fall, dass Laserpulse mit sehr hoher Pulsenergie pro beleuchteter Fläche dazu führen können, dass sich der graphithaltige Werkstoff lokal kurzzeitig sehr stark erhitzt und es dabei zu thermischen Schädigungen an dem Werkstoff kommen kann.

Es wird als vorteilhaft vermutet, wenn der gepulste Laser die hydrophil auszubildende Oberfläche mit Pulsen mit einer Pulsdauer von weniger als 1 µs, vorzugsweise weniger als 100 ns oder sogar weniger als 20 ns oder weniger als 10 ns, bestrahlt.

Anders ausgedrückt wird zur Bestrahlung der hydrophil auszubildenden Oberfläche eine Verwendung eines Nanosekunden-Kurzpulslasers als vorteilhaft erachtet. Dabei wird davon ausgegangen, dass die angestrebte hohe Leistungsdichte lediglich über einen sehr kurzen Zeitraum eingestrahlt werden braucht und eingestrahlt werden sollte, um einerseits die gewünschten hydrophilen Eigenschaften auszubilden und andererseits negative Effekte durch die Lasereinstrahlung zu vermeiden.

Insbesondere wird einerseits im Rahmen des oben vorgestellten Modells davon ausgegangen, dass Störstellen bereits mit sehr kurzzeitiger, hochintensiver Beleuchtung generiert werden können. Andererseits wird angenommen, dass es bei einer übermäßig langen Beleuchtung zu einer übermäßig starken lokalen Erhitzung des Werkstoffs und damit einhergehend zu negativen thermischen Effekten kommen kann. Insbesondere wurde beobachtet, dass es bei Pulsdauern von mehr als 20 ns oder mehr noch bei Pulsdauern von mehr als 50 ns je nach gewählter Pulsenergie, Größe des Laserspots, Pulsfrequenz und/oder Scangeschwindigkeit zu einer zerrütteten Oberfläche und/oder einem erhöhten elektrischen Kontaktwiderstand an der gelaserten Oberfläche kommen kann.

Vorzugsweise wird angestrebt, die Oberfläche mit Pulsen einer Pulsdauer von mehr als 1 ns, vorzugweise mehr als 5 ns, zu beleuchten. Zwar wurde beobachtet, dass die hydrophilen Eigenschaften auch bei einer Bestrahlung mit noch kürzeren Pulsdauern verbessert werden kann. Allerdings sind zur Erzeugung solcher noch kürzerer Pulsdauern im Bereich von Picosekunden oder sogar Femtosekunden im Allgemeinen spezielle Ultrakurzpulslaser notwendig, die teuer und/oder wartungsintensiv sein können.

Es wird davon ausgegangen, dass es im Rahmen des hierin vorgeschlagenen Verfahrens genügt, die hydrophil auszubildende Oberfläche mit Laserlichtpulsen eines ausreichend leistungsfähigen Nanosekundenlasers zu bestrahlen. Solche Nanosekundenlaser stehen verhältnismäßig kostengünstig zur Verfügung und/oder können wartungsarm betrieben werden. Beispielsweise können Nanosekunden-Faserlaser eingesetzt werden, die für einen Großserieneinsatz konzipiert sind und die kurze Laserpulse mit hoher Leistungsdichte erzeugen können.

Vorzugsweise kann der gepulste Laser die hydrophil auszubildende Oberfläche mit einer Pulsfrequenz von weniger als 100 kHz, vorzugweise weniger als 50 kHz oder sogar weniger als 30 kHz bestrahlen.

Unter der Pulsfrequenz wird dabei die Frequenz verstanden, mit der die Laserpulse periodisch wiederholt werden. Es wird davon ausgegangen, dass es sich positiv auf das durchzuführende Verfahren auswirkt, wenn die Pulsfrequenz unterhalb einer Obergrenze bleibt. Zwar kann mit einer sehr hohen Pulsfrequenz eine zu bearbeitende Oberfläche durch Abrastern entlang der Oberfläche besonders schnell gescannt werden. Allerdings wird vermutet, dass bei dem Bestrahlen mit sehr hoher Leistungsdichte Material oberflächlich aus der bestrahlten Oberfläche herausgelöst werden kann und eine Art Staubwolke bilden kann. Diese Staubwolke könnte bei sehr hohen Pulsfrequenzen, d.h. bei sehr zeitnah aufeinanderfolgenden Pulsen, zu einer teilweisen Absorption des eingestrahlten Lichts und damit zu einer verringerten Wirksamkeit des Laserpulses führen.

Der gepulste Laser kann die hydrophil auszubildende Oberfläche vorzugsweise mit Wellenlängen in einem Bereich von 800 nm bis 1500 nm, vorzugsweise von 1000 nm bis 1200 nm bestrahlen.

Einerseits kann eingestrahltes Laserlicht solcher Wellenlängen, d.h. im nahen Infrarotbereich, typischerweise von graphithaltigem Material gut absorbiert werden, insbesondere vorzugsweise oberflächennah absorbiert werden. Andererseits stehen Infrarotlaser im Allgemeinen kostengünstig und einfach anwendbar zur Verfügung.

Als ergänzende Maßnahme kann die hydrophil auszubildende Oberfläche während des Bestrahlens einer reaktiven Gasatmosphäre ausgesetzt werden.

Die reaktive Gasatmosphäre kann eine Bildung von Hydroxylgruppen oder anderer polarer chemischer Zusammensetzungen an der von dem Laser bestrahlten Oberfläche begünstigen. Die reaktive Gasatmosphäre kann beispielsweise Radikale, insbesondere Stickstoffradikale und/oder Sauerstoffradikale, aufweisen. Die reaktive Gasatmosphäre kann einen Umgebungsdruck aufweisen, d.h. einen Druck von typischerweise 1013 ± 50 hPa. Alternativ kann die Gasatmosphäre einen verringerten oder erhöhten Druck aufweisen. Außerdem kann die Gasatmosphäre auf einer Umgebungstemperatur, d.h. einer Temperatur von typischerweise 25 ± 15 °C, sein. Alternativ kann die Gasatmosphäre eine geringere oder höhere Temperatur aufweisen.

Vorzugsweise wird der gepulste Laser, der eingesetzt wird, um die Werkstoffoberfläche hydrophiler zu gestalten, ergänzend auch zum Entfernen einer oberflächlichen Polymerschicht und/oder Oberflächenschicht, welche aus einem anderen Material als dem graphithaltigen Werkstoff besteht, von dem graphithaltigen Werkstoff eingesetzt.

Wie bereits weiter oben beschrieben, können insbesondere zum Bilden von Bipolarplatten Werkstoffe eingesetzt werden, bei denen elektrisch hochleitfähiges Graphitpulver in eine Matrix aus einem Polymermaterial eingebettet ist. Typischerweise bildet sich beim Fertigen einer Bipolarplatte aus einem solchen Werkstoff oberflächlich eine dünne Polymerschicht ähnlich einer Oberflächenhaut. Ergänzend oder alternativ kann sich an der Oberfläche des graphithaltigen Werkstoffs eine Oberflächenschicht bilden, welche aus einem anderen Material als dem graphithaltigen Werkstoff besteht. Eine solche Oberflächenschicht kann beispielsweise Additive oder externe Formtrennmittel enthalten oder aus diesen bestehen. Die Polymerschicht bzw. die Oberflächenschicht kann zu nachteiligen elektrischen Eigenschaften führen, beispielsweise indem sie einen Kontaktwiderstand zwischen der Oberfläche des graphithaltigen Werkstoffs und angrenzendem Material wie beispielsweise einem Elektrolyten oder einem Reaktionspartner-Fluid erhöhen. Um den darunterliegenden verpressten Graphit freizulegen und somit unter anderem einen elektrischen Kontaktwiderstand zu einem angrenzenden Medium wie beispielsweise einem Elektrolyt zu reduzieren, muss diese oberflächliche Polymerschicht und/oder Oberflächenschicht im Allgemeinen zumindest bereichsweise entfernt werden. Es wurde erkannt, dass zu diesem Zweck vorteilhafterweise der gleiche Laser eingesetzt werden kann, der auch zum hierin beschriebenen Bewirken der hydrophileren Oberflächeneigenschaften eingesetzt wird.

Insbesondere wurde beobachtet, dass das Entfernen der Polymerschicht und/oder Oberflächenschicht mit gleichen Laserparametern erfolgen kann wie das Ausbilden der hydrophilen Oberfläche.

Anders ausgedrückt, wurde erkannt, dass die oberflächliche Polymerschicht auf dem Substrat mit dem gleichen Laser und den gleichen Laserparametern entfernt werden kann, wie diese auch zum Bewirken der hydrophileren Oberflächeneigenschaften führen können. Somit kann vorzugsweise in einem einzigen, gemeinsamen Prozessschritt sowohl die oberflächliche Polymerschicht und/oder nachteilige Oberflächenschicht von dem Substrat entfernt werden als auch der darunterliegende Anteil des graphithaltigen Werkstoffs derart modifiziert werden, dass dieser hydrophilere Eigenschaften entwickelt.

Zusammenfassend kann mit dem hierin vorgestellten Verfahren mit verhältnismäßig geringem apparativem Aufwand eine Oberfläche eines mit graphithaltigem Werkstoff hergestellten Bauelements bereichsweise oder ganzflächig hydrophil ausgestaltet werden und/oder gleichzeitig eine nachteilige oberflächliche Polymerschicht bzw. Oberflächenschicht entfernt werden. Vorteilhafterweise kann hierzu ein gepulster Laser eingesetzt werden, der für diese Aufgabe gewisse Bedingungen, insbesondere hinsichtlich einer mindestens zu erbringenden Leistungsdichte, erfüllen muss, der aber dennoch kostengünstig und industriell erprobt bereitgestellt werden kann. Insbesondere kann hierfür ein gepulster Laser eingesetzt werden, der zum Beispiel bei der Bearbeitung des graphithaltigen Werkstoffs bzw. der Fertigung von Bipolarplatten auch für andere Zwecke einsetzbar ist, beispielsweise zum Entfernen einer oberflächlichen Polymerschicht an dem graphithaltigen Werkstoff. Bestenfalls können hierbei ausreichende hydrophile Eigenschaften der Oberfläche maßgeblich oder alleinig durch das beschriebene Bestrahlen mit dem leistungsstarken gepulsten Laser bewirkt werden. Mit anderen Worten kann vorzugsweise auf ergänzende Maßnahmen verzichtet werden. Zum Beispiel können vorangehende Bearbeitungsschritte wie beispielsweise ein Aufrauen der hydrophil auszubildenden Oberfläche entbehrlich sein. Ferner können nachfolgende Bearbeitungsschritte wie beispielsweise ein weiteres Aufrauen, ein Beschichten, ein Oxidieren, eine Plasmabehandlung oder eine Coronabehandlung entbehrlich sein.

Ausführungsformen des hierin vorgestellten Verfahrens können unter anderem vorteilhaft dazu eingesetzt werden, beim Fertigen einer Bipolarplatte zumindest Teilbereiche der Bipolarplatte mit einer hydrophilen Oberfläche zu versehen. Ein plattenartiges Substrat kann hierbei vollständig aus graphithaltigem Werkstoff bestehen oder zumindest an einer seiner Oberflächen graphithaltigen Werkstoff aufweisen. Eine freiliegende Oberfläche dieses Werkstoffs kann dann in der beschriebenen Weise durch Bestrahlen mit Laserpulsen derart modifiziert werden, dass sie hydrophile Eigenschaften aufweist. Eine derart gefertigte Bipolarplatte kann vorteilhaft in einer Brennstoffzelle oder einer Flussbatterie, welche als Energiespeicheranordnung dient, eingesetzt werden.

Es wird darauf hingewiesen, dass hierin mögliche Merkmale und Vorteile von Ausführungsformen der Erfindung teils mit Bezug generell auf ein Verfahren zum Ausbilden einer hydrophilen Oberfläche auf einem graphithaltigen Werkstoff und teils mit Bezug auf ein Verfahren zum Fertigen einer Bipolarplatte sowie auf eine verfahrensgemäß gefertigte Bipolarplatte und eine damit ausgestattete Energiespeicheranordnung beschrieben sind. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt eine Bipolarplatte während eines Verfahrens gemäß einer Ausführungsform der vorliegenden Erfindung.
Figur 2 zeigt eine Energiespeicheranordnung mit einer Brennstoffzelle.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

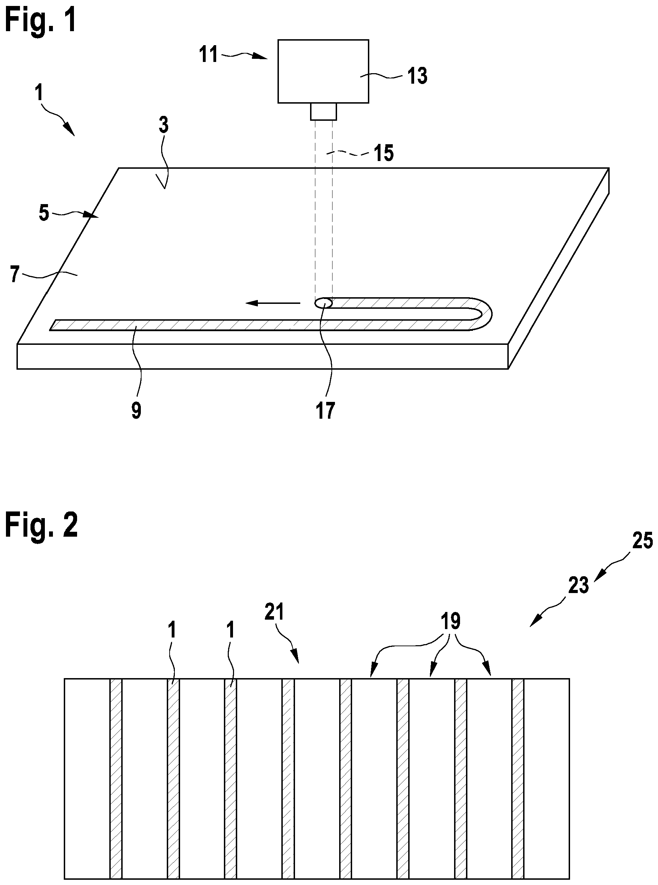

Figur 1 zeigt eine stark schematisierte Darstellung einer Bipolarplatte 1, während diese mit einem erfindungsgemäßen Verfahren behandelt wird, um eine Oberfläche 3 hydrophil auszubilden.

Die Bipolarplatte 1 verfügt hierbei über ein plattenartige Substrat 5. Zumindest angrenzend an die freiliegende Oberfläche 3 steht das Substrat 5 aus einem graphithaltigen Werkstoff 7. Der graphithaltige Werkstoff 7 enthält Graphitpartikel. Die Graphitpartikel sind typischerweise von einer Matrix aus Polymermaterial zusammengehalten. An einer Oberfläche kann das Substrat 5 eine oberflächliche Polymerschicht aufweisen (aus Gründen der Übersichtlichkeit in der Figur nicht veranschaulicht), welche beispielsweise beim Herstellen des Substrats 5 gebildet worden sein kann. Die Bipolarplatte 1 kann strukturell und/oder funktional in gleicher oder ähnlicher Weise ausgestaltet sein, wie herkömmliche Bipolarplatten.

Um zumindest Teilbereiche 9 der freiliegenden Oberfläche 3 hydrophil auszubilden, werden diese Teilbereiche 9 mithilfe eines gepulsten Lasers 11 bestrahlt. Der gepulste Laser 11 kann beispielsweise ein Nanosekunden-Faserlaser 13 sein. Der gepulste Laser 11 kann einen gepulsten Laserstrahl 15 auf einen Belichtungsbereich 17 an der Oberfläche 3 des Substrats 5 richten. Der Laserstrahl 15 und der Belichtungsbereichs 17 können sukzessive entlang der Oberfläche 3 verlagert werden, um die hydrophil auszubildenden Teilbereiche 9 zu beleuchten. Die Teilbereiche 9 können dabei beispielsweise länglich ausgebildet sein und zum Beispiel den Boden einer Kanalstruktur bilden, in der während eines Betriebs einer Brennstoffzelle oder einer Flussbatterie Wasser entlang der Oberfläche der Bipolarplatte 1 geleitet werden soll.

Der Laserstrahl 15 trifft hierbei mit einer Leistungsdichte von 0,5 MW/mm² oder mehr auf den Belichtungsbereich 17. Jeder einzelne Puls hat vorzugsweise eine flächenbezogenen Pulsenergie von mehr als 0,1 J/mm², aber weniger als 1 J/mm². Der Puls kann beispielsweise eine Pulsdauer von zwischen 5 ns und 20 ns aufweisen. Pulse können beispielsweise mit einer Pulsfrequenz von zwischen 20 kHz und 40 kHz wiederholt werden. Der Laserstrahl 15 kann beispielsweise mit einer Wellenlänge von 1064 nm emittiert werden. Während des Bestrahlens kann das Substrat 5 einer reaktiven Gasatmosphäre ausgesetzt sein. Im gleichen Arbeitsschritt oder, optional, in einem separaten Arbeitsschritt, kann der Laser 11 auch dazu eingesetzt werden, eine oberflächliche Polymerschicht von dem Substrat 5 zu entfernen. Der Laser 11 kann hierbei vorzugsweise mit den gleichen Laserparametern betrieben werden, wie diese zum Erreichen der verstärkt hydrophilen Oberflächeneigenschaften eingesetzt werden.

Die Bipolarplatte 1 kann beispielsweise in einer Brennstoffzelle 19 verwendet werden, wie sie schematisch in Fig. 2 dargestellt ist. In einem Zellenstapel 21 eines als Energiespeicheranordnung 25 dienenden Brennstoffzellensystems 23 können dabei benachbarte Brennstoffzellen 19 mithilfe von Bipolarplatten 1 voneinander getrennt, elektrisch miteinander verbunden und mit Brennstoff versorgt werden.

Nachfolgend werden Hintergründe sowie mögliche Ausgestaltungen und/oder Vorteile von Ausführungsformen der hierin dargelegten Erfindung nochmals mit einer teilweise anderen Wortwahl beschrieben, wobei diese Beschreibung lediglich weiter erläuternd, aber in keiner Weise einschränkend auszulegen ist.

Die Erfindung betrifft unter anderem ein Verfahren zur Herstellung einer Bipolarplatte für eine Flussbatterie, Brennstoffzelle oder dergleichen, und eine mit dem Verfahren hergestellte Bipolarplatte. Die Erfindung betrifft weiter eine Brennstoffzelle, insbesondere ein Brennstoffzellenbündel (Stack), oder eine Flussbatterie, insbesondere Redox-Flow-Batterie, mit einer erfindungsgemäßen Bipolarplatte. Die Erfindung betrifft überdies eine Verwendung eines Lasers, insbesondere eines Ultrakurzpuls-Lasers, zur Herstellung einer Bipolarplatte.

### Zweck der Erfindung:

Verfahren zum Erzeugen von hydrophilen Oberflächen auf graphitischen Werkstoffen, insbesondere auf Bipolarplatten aus graphitgefüllten Polymeren zum Einsatz in Brennstoffzellen. Die Leistung und Zuverlässigkeit von Brennstoffzellen hängt in hohem Maß am Wassermanagement in der Zelle. Anoden-, d. h. brenngasseitig muss eine gleichmäßige Befeuchtung der Elektrode und der Membran sichergestellt werden, kathoden-, d. h. sauerstoffseitig muss dagegen das bei der Reaktion entstehende Wasser effektiv abgeführt werden, da ansonsten überschüssiges Wasser das Porensystem in der Elektrode und die Luftkanäle in der Bipolarplatte blockieren kann.

Typischerweise erfordert dies Bipolarplatten mit hydrophilen Oberflächen. Sehr gute Benetzungseigenschaften führen dazu, dass Wasser nicht mehr tropfenförmig vorliegt, sondern einen Oberflächenfilm ausbildet und dann mit dem Gasstrom leicht ausgetragen werden kann.

Die Oberfläche von graphitgefüllte Polymeren wird von Wasser meist nur schlecht benetzt, die Kontaktwinkel liegen typischerweise bei > 60°. Die Ursache liegt in einer Kombination von hydrophoben Eigenschaften der graphitischen Füllstoffe, aber auch der polymeren Bindemittel und von Trennmitteln, die sich an der Oberfläche anreichern können.

Aus Gründen der besseren elektrischen Kontaktierung kann es erforderlich sein, die polymer- und trennmittelreiche Oberflächenhaut von den Funktionsflächen zu entfernen. Gängige Verfahren sind u. a. ein abrasives Bürsten, Feinstrahlen, Schleifen und insbesondere auch die Reinigung mit einem Infrarot-Laser. Diese Verfahren führen meist zu einem leichten Aufrauhen der Oberfläche. Bei gegebenen hydrophoben Eigenschaften des Graphits kann dies sogar zu superhydrophoben Oberflächen (Lotus-Effekt) mit Kontaktwinkeln > 90° führen, von denen Wassertropfen sehr leicht abperlen.

Aus der Literatur sind Verfahren zur Beschichtung oder zur Modifizierung der Oberfläche bekannt. Das übergreifende Ziel ist die Schaffung einer hinreichenden Zahl von polaren funktionellen Gruppen, die eine Voraussetzung für gute Benetzungseigenschaften sind:
- Als Beschichtungsstoffe können polare Polymere (z. B. Phenolharze, vernetzter Polyvinylalkohol) eingesetzt werden, denen auch noch feinteilige polare Füllstoffe (z. B. pyrogene Kieselsäure, oxidierte Ruße) zugesetzt werden können.
- Im Grenzbereich zwischen Beschichtung und Oberflächenmodifikation steht die Behandlung mit einem Siloxan-haltigen Plasma, was zur Abscheidung einer sehr dünnen Schicht von pyrogener Kieselsäure führt.
- Überwiegend wird jedoch die direkte Oxidation der Graphitoberflächen angestrebt, wobei verschiedene Verfahren zum Einsatz kommen:
   - Nasschemische Oxidation mit starken oxidierenden Säuren oder Wasserstoffperoxid
   - Trockene Oxidation in der Gasphase mit Fluor oder Schwefeltrioxid
   - Atmosphärische Plasmabehandlung
   - Niederdruck-Plasmabehandlung
   - Corona-Behandlung

Nachteile der vorbekannten Lösungen:
- Beschichtungen mit polymeren Bindemitteln können die graphitischen Füllstoffe teilweise wieder bedecken und damit den elektrischen Kontaktwiderstand erhöhen. Weiterhin gestaltet sich eine gleichmäßige Beschichtung von filigranen Kanalstrukturen, vor allem bei füllstoffhaltigen Systemen sehr schwierig. Die Einhaltung von sehr engen Toleranzen der Kanalgeometrien, was wiederum eine notwendige Voraussetzung für eine gleichmäßige Strömung und einen homogenen Stoffaustausch ist, ist damit nicht mehr möglich.
- Eine ausreichende Schichthaftung, die auch einem längeren Betrieb der Brennstoffzelle Stand hält, ist bei Beschichtungen mit geringem Bindemittelgehalt nicht zu gewährleisten. Dies gilt umso mehr bei der bindemittelfreien Abscheidung von pyrogener Kieselsäure über eine Plasmabehandlung.
- Die Oxidation mit Fluor oder Schwefeltrioxid in der Gasphase kann zu einer dauerhaft hydrophilen Oberflächenmodifikation führen, aufgrund der Toxizität der Gase kann die Behandlung aber nur in hermetisch abgeschlossenen Systemen durchgeführt werden, was für eine Großserienfertigung ein gravierender Nachteil ist. Weiterhin ist eine Behandlung von Teilflächen nicht oder nur mit einer sehr aufwändigen Maskierung der Platten möglich.
- Die Plasmabehandlung, insbesondere bei Normaldruck, und das technologisch verwandte Corona-Verfahren sind dagegen sehr gut in einen Fertigungsprozess zu integrieren und führen auch kurzfristig zu sehr gut benetzenden Oberflächen mit Kontaktwinkeln < 15°. Es zeigt sich jedoch, dass dieser Zustand nur über wenige Stunden bzw. Tage anhält. Nach längerer Liegezeit stellt sich ein weitgehend stationärer Zustand mit einer mittleren Benetzbarkeit und Kontaktwinkeln im Bereich von ca. 25 - 50° ein.

### Aufgabe der Erfindung:

Das Ziel sind dauerhaft hydrophile Oberflächen mit Kontaktwinkeln von Wassertropfen < 25° durch die Anwendung eines rationellen großserientauglichen Fertigungsverfahrens.

### Lösung:

Überraschenderweise hat sich gezeigt, dass dauerhaft hydrophile Oberflächen mit der Laserbehandlung, die auch zum Entfernen der polymerreichen Oberflächenhaut eingesetzt werden kann, hergestellt werden können. Entgegen der bisherigen Annahme, dass die Laserbehandlung eher die hydrophoben Eigenschaften verstärkt, führt die Behandlung mit einer hinreichend hohen Pulsenergie nicht nur zum Abtrag der Polymerhaut, sondern führt auch zu einer strukturellen Veränderung der Graphitoberfläche. Kurze intensive Laser induzieren offensichtlich Fehlstellen in den oberflächennahen Schichtebenen der Graphitpartikel und im Extremfall zur weitgehenden Zerstörung der Graphitkristalle. Die Fehlstellen sättigen sich dann spontan mit Sauerstoff- und Hydroxylgruppen, die eine Voraussetzung für ein gutes Benetzungsverhalten sind.

Der Effekt konnte zunächst beim Einsatz eines Ultrakurzpuls-Lasers mit Pulsdauern von ca. 15 ps und einer Pulsenergie von ca. 0,4 mJ nachgewiesen werden. Aufgrund der begrenzten Leistung und den vergleichsweise hohen Kosten scheidet der Einsatz von Ultrakurzpulslasern bei der Großserienfertigung von Bipolarplatten jedoch meist aus. Überraschenderweise hat sich dann aber gezeigt, dass sich vergleichbare Oberflächeneigenschaften auch mit gepulsten Nanosekunden-Faserlasern einstellen lassen, wenn die Pulsenergie auf einem vergleichbaren Niveau liegt, obwohl sich die Einzelpulsleistungen mit ca. 30 MW bzw. 5 kW um mehr als drei Größenordnungen unterscheiden. Scheinbar sollte die Pulsenergie pro Flächeneinheit einen kritischen Wert übersteigen. In den beschriebenen Fällen lag dieser Wert bei ca. 0,3 - 0,7 J/mm², die Untergrenze wurde noch nicht präzise bestimmt. Nanosekunden-Faserlaser sind in unterschiedlichen Leistungsklassen Stand der Technik und lassen sich auf einfache Weise für den Großserieneinsatz skalieren.

Dauerhaft hydrophile Eigenschaften wären möglicherweise auch durch die Kombination von Füllstoffen mit geringem Graphitierungsgrad und eine Plasma- oder Corona-Behandlung nach der Laserbehandlung mit geringerer Pulsenergie möglich. Die Füllstoffe hätten dann bereits eine hinreichende Anzahl von Fehlstellen, die zur Ausbildung der polaren Oberflächengruppen bei der oxidierenden Behandlung benötigt werden. In der Folge hat der gesamte Werkstoff dann aber auch eine geringe elektrische und thermische Leitfähigkeit und es wird wieder ein zusätzlicher Fertigungsschritt benötigt.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen.

### Bezugszeichenliste

- 1: Bipolarplatte
- 3: hydrophil auszubildende Oberfläche
- 5: Substrat
- 7: graphithaltiger Werkstoff
- 9: Teilbereich
- 11: gepulster Laser
- 13: Nanosekunden-Faserlaser
- 15: Laserstrahl
- 17: Belichtungsbereich
- 19: Brennstoffzelle
- 21: Zellenstapel
- 23: Brennstoffzellensystem
- 25: Energiespeicheranordnung

## Patentansprüche

1. Verfahren zum Ausbilden einer hydrophilen Oberfläche (3) auf einem graphithaltigen Werkstoff (7),
**dadurch gekennzeichnet, dass**
die hydrophil auszubildende Oberfläche (3) mit einem gepulsten Laser (11) mit einer Leistungsdichte vom mindestens 0,5 MW/mm² bestrahlt wird.

2. Verfahren nach Anspruch 1,
wobei der gepulste Laser (11) die hydrophil auszubildende Oberfläche (3) mit Pulsen mit einer flächenbezogenen Pulsenergie von mindestens 0,1 J/mm² bestrahlt.

3. Verfahren nach einem der vorhergehenden Ansprüche,
wobei der gepulste Laser (11) die hydrophil auszubildende Oberfläche (3) mit Pulsen mit einer flächenbezogenen Pulsenergie von weniger als 1 J/mm² bestrahlt.

4. Verfahren nach einem der vorhergehenden Ansprüche,
wobei der gepulste Laser (11) die hydrophil auszubildende Oberfläche (3) mit Pulsen mit einer Pulsdauer von weniger als 1 µs bestrahlt.

5. Verfahren nach einem der vorhergehenden Ansprüche,
wobei der gepulste Laser (11) die hydrophil auszubildende Oberfläche (3) mit einer Pulsfrequenz von weniger als 100 kHz bestrahlt.

6. Verfahren nach einem der vorhergehenden Ansprüche,
wobei der gepulste Laser (11) die hydrophil auszubildende Oberfläche (3) mit Wellenlängen von zwischen 800 nm und 1500 nm bestrahlt.

7. Verfahren nach einem der vorhergehenden Ansprüche,
wobei die hydrophil auszubildende Oberfläche (3) während des Bestrahlens einer reaktiven Gasatmosphäre ausgesetzt wird.

8. Verfahren nach einem der vorhergehenden Ansprüche,
wobei der graphithaltige Werkstoff (7) Graphitpartikel aufweist, die in einer Polymermatrix eingebettet sind.

9. Verfahren nach einem der vorhergehenden Ansprüche,
wobei der gepulste Laser ergänzend auch zum Entfernen einer oberflächlichen Polymerschicht und/oder Oberflächenschicht, welche aus einem anderen Material als dem graphithaltigen Werkstoff besteht, von dem graphithaltigen Werkstoff (7) eingesetzt wird.

10. Verfahren nach Anspruch 9,
wobei das Entfernen der Polymerschicht und/oder Oberflächenschicht mit gleichen Laserparametern erfolgt wie das Ausbilden der hydrophilen Oberfläche.

11. Verfahren nach einem der vorhergehenden Ansprüche,
wobei der graphithaltige Werkstoff (7) einen Graphitanteil vom mindestens 60 Vol-% aufweist.

12. Verfahren nach einem der vorhergehenden Ansprüche,
wobei der graphithaltige Werkstoff (7) einen Polymeranteil von mindestens 20 Vol-% aufweist.

13. Verfahren zum Fertigen einer Bipolarplatte (1) einer Brennstoffzelle (19) oder einer Flussbatterie, wobei das Verfahren aufweist:
Bereitstellen eines plattenartigen Substrats (5), welches zumindest angrenzend an eine freiliegende Oberfläche (3) des Substrates (5) aus einem graphithaltigen Werkstoff besteht, und
Ausbilden zumindest von Teilbereichen (9) der freiliegenden Oberfläche (3) als hydrophile Oberfläche (3) mittels des Verfahrens gemäß einem der Ansprüche 1 bis 12.

## Claims

1. Method for forming a hydrophilic surface (3) on a graphite-containing material (7),
**characterized in that**
the surface (3) to be rendered hydrophilic is irradiated with a pulsed laser (11) having a power density of at least 0.5 MW/mm².

2. Method according to claim 1,
wherein the pulsed laser (11) irradiates the surface (3) to be rendered hydrophilic with pulses having a pulse energy per unit area of at least 0.1 J/mm².

3. Method according to any one of the preceding claims,
wherein the pulsed laser (11) irradiates the surface (3) to be rendered hydrophilic with pulses having a pulse energy per unit area of less than 1 J/mm².

4. Method according to any one of the preceding claims,
wherein the pulsed laser (11) irradiates the surface (3) to be rendered hydrophilic with pulses having a pulse duration of less than 1 µs.

5. Method according to any one of the preceding claims,
wherein the pulsed laser (11) irradiates the surface (3) to be rendered hydrophilic with a pulse frequency of less than 100 kHz.

6. Method according to any one of the preceding claims,
wherein the pulsed laser (11) irradiates the surface (3) to be rendered hydrophilic with wavelengths of between 800 nm and 1500 nm.

7. Method according to any one of the preceding claims,
wherein the surface (3) to be rendered hydrophilic is exposed to a reactive gas atmosphere during the irradiation.

8. Method according to any one of the preceding claims,
wherein the graphite-containing material (7) has graphite particles which are embedded in a polymer matrix.

9. Method according to any one of the preceding claims,
wherein the pulsed laser is additionally also used to remove from the graphite-containing material (7) a superficial polymer layer and/or surface layer which consists of a material other than the graphite-containing material.

10. Method according to claim 9,
wherein the removal of the polymer layer and/or surface layer is carried out with same laser parameters as the formation of the hydrophilic surface.

11. Method according to any one of the preceding claims,
wherein the graphite-containing material (7) has a graphite content of at least 60 vol.%.

12. Method according to any one of the preceding claims,
wherein the graphite-containing material (7) has a polymer content of at least 20 vol.%.

13. Method for manufacturing a bipolar plate (1) of a fuel cell (19) or of a flow battery, wherein the method comprises:
providing a plate-like substrate (5) which, at least adjacent to an exposed surface (3) of the substrate (5), consists of a graphite-containing material, and
forming at least part-regions (9) of the exposed surface (3) as a hydrophilic surface (3) by means of the method according to any one of claims 1 to 12.

## Revendications

1. Procédé de formation d'une surface hydrophile (3) sur un matériau contenant du graphite (7),
**caractérisé en ce que**
la surface à former de manière hydrophile (3) est irradiée avec un laser pulsé (11) ayant une densité de puissance d'au moins 0,5 MW/mm² .

2. Procédé selon la revendication 1,
dans lequel le laser pulsé (11) irradie la surface à former de manière hydrophile (3) avec des impulsions ayant une énergie d'impulsion surfacique d'au moins 0,1 J/mm² .

3. Procédé selon l'une quelconque des revendications précédentes,
dans lequel le laser pulsé (11) irradie la surface à former de manière hydrophile (3) avec des impulsions ayant une énergie d'impulsion surfacique de moins de 1 J/mm² .

4. Procédé selon l'une quelconque des revendications précédentes,
dans lequel le laser pulsé (11) irradie la surface à former de manière hydrophile (3) avec des impulsions ayant une durée d'impulsion de moins de 1 µs.

5. Procédé selon l'une quelconque des revendications précédentes,
dans lequel le laser pulsé (11) irradie la surface à former de manière hydrophile (3) avec une fréquence d'impulsion de moins de 100 kHz.

6. Procédé selon l'une quelconque des revendications précédentes,
dans lequel le laser pulsé (11) irradie la surface à former de manière hydrophile (3) avec des longueurs d'onde comprises entre 800 nm et 1500 nm.

7. Procédé selon l'une quelconque des revendications précédentes,
dans lequel la surface à former de manière hydrophile (3) est exposée à une atmosphère de gaz réactif pendant l'irradiation.

8. Procédé selon l'une quelconque des revendications précédentes,
dans lequel le matériau contenant du graphite (7) comprend des particules de graphite qui sont incorporées dans une matrice polymère.

9. Procédé selon l'une quelconque des revendications précédentes,
dans lequel le laser pulsé est également utilisé en supplément pour enlever du matériau contenant du graphite (7) une couche polymère superficielle et/ou une couche superficielle qui est constituée d'un matériau différent du matériau contenant du graphite.

10. Procédé selon la revendication 9,
dans lequel l'enlèvement de la couche polymère et/ou de la couche superficielle a lieu avec des mêmes paramètres laser que la formation de la surface hydrophile.

11. Procédé selon l'une quelconque des revendications précédentes,
dans lequel le matériau contenant du graphite (7) présente une proportion de graphite d'au moins 60 % en volume.

12. Procédé selon l'une quelconque des revendications précédentes,
dans lequel le matériau contenant du graphite (7) présente une proportion de polymère d'au moins 20 % en volume.

13. Procédé de fabrication d'une plaque bipolaire (1) d'une pile à combustible (19) ou d'une batterie à flux, le procédé comprenant :
la fourniture d'un substrat en forme de plaque (5), qui est constitué d'un matériau contenant du graphite au moins adjacente à une surface exposée (3) du substrat (5), et
la formation d'au moins des zones partielles (9) de la surface exposée (3) en tant que surface hydrophile (3) au moyen du procédé selon l'une quelconque des revendications 1 à 12.
